# EUROPÄISCHE PATENTSCHRIFT

(11) **EP 3 244 704 B1**
(45) Veröffentlichungstag und Bekanntmachung des Hinweises auf die Patenterteilung: **29.08.2018**
(21) Anmeldenummer: 17169217.1
(22) Anmeldetag: 03.05.2017
(51) Int. Cl.: H05B 37/02, G02C 7/04, G05D 25/02, H04L 12/28, G02C 11/00, H04L 12/46

(54) **STEUERSYSTEM UND VERFAHREN ZUR STEUERUNG VON ANSTEUERBAREN LEUCHTEN UND/ODER VERSCHATTUNGSEINRICHTUNGEN**
CONTROL SYSTEM AND METHOD FOR CONTROLLING CONTROLLABLE LIGHTS AND/OR SHADING FACILITIES
SYSTÈME DE COMMANDE ET PROCÉDÉ DE COMMANDE D'ÉCLAIRAGES ET/OU DE DISPOSITIFS DE PROTECTION CONTRE LA LUMIERE POUVANT ÊTRE COMMANDÉS

(30) Priorität: 11.05.2016 DE 102016208071
(43) Veröffentlichungstag der Anmeldung: 15.11.2017
(73) Patentinhaber: Zumtobel Lighting GmbH, 6850 Dornbirn (AT)
(72) Erfinder: Siegel, Martin, 88131 Bodolz (DE)
(74) Vertreter: Kiwit, Benedikt

(56) Entgegenhaltungen:
- EP-A1- 2 156 861
- EP-B1- 2 525 873
- WO-A2-2015/006656
- US-A1- 2015 130 355
- US-B1- 9 158 133

## Beschreibung

### 1. Gebiet der Erfindung

Die vorliegende Erfindung betrifft ein Steuersystem und ein Verfahren zur Steuerung von ansteuerbaren Leuchten und/oder Verschattungseinrichtungen.

### 2. Hintergrund

Im Stand der Technik sind Lichtsysteme bekannt, die ansteuerbare Leuchten, Lampen und anderer ansteuerbare Einrichtungen umfassen, wie beispielsweise Jalousien oder sonstige Verschattungseinrichtungen. Lampen und Leuchten derartiger Lichtsysteme werden dabei mittels einer zentralen oder dezentralen Steuereinheit angesteuert. Insbesondere ist es bekannt, die Helligkeit bzw. die Beleuchtungsstärke von Leuchten oder von mehreren gemeinsam ansteuerbaren Leuchten an die Lichtverhältnisse oder Beleuchtungsanforderungen in einem Raum anzupassen. Bei automatisierten Lichtsystemen werden dabei zur Erfassung der Beleuchtungssituation häufig Sensoren in einem zu beleuchtenden Raum angeordnet, die die aktuelle Beleuchtungssituation in dem Raum erfassen und entsprechende Daten/Parameter an die Steuereinheit weitergeben können, die die ansteuerbaren Leuchten und Einrichtungen wiederum in Abhängigkeit der erfassten Daten ansteuern kann.
Häufig sind die Sensoren zur Erfassung der Beleuchtungssituation in dem zu beleuchtenden Raum ortsfest montiert bzw. können diese in einer separaten Erfassungseinheit in einem Raum angeordnet werden. Bei einer solchen Lösung zur Steuerung der Leuchten bzw. zur Erfassung der Beleuchtungssituation ist es allerdings notwendig, dass die Erfassungseinheit korrekt im Raum positioniert werden kann, was in der Praxis aufgrund der baulichen Gegebenheiten oftmals nicht gewährleistet werden kann. Ferner kann eine angepasste Steuerung der Leuchten nicht ohne Weiteres bereitgestellt werden, wenn die Sensoren ortsfest im Raum montiert wurden und sich die Beleuchtungsanforderungen nachträglich verändert haben, beispielsweise bei einer veränderten Raumnutzung oder einer veränderten Anordnung eines oder mehrerer Arbeitsplätze.

EP 2 156 861 A1 offenbart ein am Körper tragbares Messgerät, das einen Lichtmengenmesser zur Messung der über die Zeit einwirkenden Lichtmenge und eine Anzeigevorrichtung zur Abgabe eines Lichtmangelsignals aufweist. Das Messgerät kann eine berührungslos arbeitende
Datenübertragungsvorrichtung besitzen, mittels derer die erfassten Daten auf ein externes Auswerte- und/oder Steuersystem übertragen werden können, um so in Abhängigkeit der erfassten Lichtmenge Gebäudefunktionen, wie beispielsweise eine Gebäudelichtanlage oder eine Klimaanlage, zu steuern.

US 2015/130355 A1 offenbart ein tragbares Gerät, aufweisend ein Display, eine Kamera oder andere optische Geräte sowie eine drahtlose Kommunikationsvorrichtung, mittels der beispielsweise Daten mit einem Server ausgetauscht werden können.

EP 2 525 873 B1 offenbart ein Beleuchtungssystem zu Lichttherapiezwecken mit ansteuerbaren Lichtquellen, welche über eine Steuereinrichtung angesteuert werden. Die Ansteuerung erfolgt in Abhängigkeit der Lichtintensität und/oder der Lichtmenge, der eine Person im Laufe des Tages ausgesetzt war. Hierfür trägt die Person ein tragbares Gerät, das einen Lichtsensor und ein drahtloses Kommunikationsmittel umfasst. Zur Energieversorgung des tragbaren Geräts ist eine Energiequelle vorgesehen

WO 2015/0066556 A2 offenbart ein am Körper tragbares Messgerät, das einen Lichtmengenmesser zur Messung der über die Zeit einwirkenden Lichtmenge aufweist. Mittels eines Photoelementes wird Licht in elektrischen Strom umgewandelt, welcher zur Stromversorgung der elektrischen Komponenten auf dem Messgerät verwendet wird.

US 9 158 133 B1 offenbart eine Vorrichtung, ein System und Verfahren, die in Verbindung mit Kontaktlinsensensoren verwendet werden. Die Kontaktlinse weist hierbei ein Substrat auf, das einen Teil des Körpers der Kontaktlinse bildet. Auf oder innerhalb des Substrats sind ein Sensor zur Messung biologischer Parameter des Kontaktlinsenträgers, eine optische Kommunikationsvorrichtung zum Datenaustausch mit einem Empfängergerät und ein Photodetektor angeordnet, der auftreffendes Licht detektiert und Energie aus dem Licht erzeugt.

Ausgehend von diesem Stand der Technik stellt sich die vorliegende Erfindung die Aufgabe, ein Steuersystem und ein Verfahren zur Steuerung von ansteuerbaren Leuchten und/oder Verschattungseinrichtungen bereitzustellen, mit dem eine besser angepasste Beleuchtung bereitgestellt werden kann. Insbesondere soll dabei eine auf eine Person individualisierte Steuerung der Leuchten und Verschattungseinrichtungen ermöglicht werden. Darüber hinaus soll eine einfache und schnelle Anpassung an veränderte Beleuchtungsanforderungen ermöglicht werden.
Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden dabei den zentralen Gedanken der vorliegenden Erfindung in besonders vorteilhafter Weise weiter.

### 3. Ausführliche Beschreibung der Erfindung

Eine erfindungsgemäßes Steuersystem zur Steuerung von ansteuerbaren Leuchten und/oder Verschattungseinrichtungen umfasst:
- zumindest ein auf eine Person individualisiertes Erfassungs- und Kommunikationsmittel, wobei das Erfassungs- und Kommunikationsmittel, eine Schnittstelle zur drahtlosen Kommunikation und zumindest ein photosensitives Element umfasst, das eingerichtet ist, um zumindest einen Parameter des auf das Erfassungs- und Kommunikationsmittel auftreffenden Lichts zu erfassen, und wobei das Erfassungs- und Kommunikationsmittel zumindest einen Energiegewinnungsschaltkreis umfasst, der eingerichtet ist, um zumindest die Schnittstelle zur drahtlosen Kommunikation zu betreiben; und
- zumindest eine Empfangs- und Steuereinheit, die eingerichtet ist in Abhängigkeit des vom Erfassungs- und Kommunikationsmittel erfassten und auf die Empfangs- und Steuereinheit drahtlos übertragenen Parameters die ansteuerbaren Leuchten und/oder Verschattungseinrichtungen zu steuern.

Erfindungsgemäß ist unter einem auf eine Person individualisierten Erfassungs- und Kommunikationsmittel zu verstehen, dass dieses einer Person zuordenbar ist. Die Erfassungs- und Kommunikationsmittel können dabei derart an einer Person angeordnet werden, dass der erfasste zumindest eine Parameter des auf das Erfassungs- und Kommunikationsmittel auftreffenden Lichts möglichst dem von der Person wahrgenommenen Beleuchtungseindruck wiederspiegelt. Erfindungsgemäß müssen somit keine fest montierten Sensoren oder Sensoren in einer beweglichen Erfassungseinheit mehr vorgesehen werden, mit denen die Beleuchtungssituation ohnehin nicht an einer Person sondern nur an mehr oder weniger fest vorgegebenen Positionen im Raum erfasst werden können.

Um den erfassten Parameter möglichst an dem von der Person wahrgenommenen Beleuchtungseindruck zu koppeln, sind gemäß der Erfindung die individualisierten Erfassungs- und Kommunikationsmittel in einer Kontaktlinse, die von der Person getragen werden kann, integriert. Die Anordnung der Erfassungs- und Kommunikationsmittel in einer Kontaktlinse ist dabei besonders bevorzugt, da die hierfür notwenige Elektronik derart in einer Kontaktlinse anordenbar ist, dass diese von der Person nicht bzw. fast nicht wahrgenommen wird. Darüber hinaus hat der Einsatz in einer Kontaktlinse den Vorteil, dass diese aufgrund des Lidschlusses des Auges in der Regel eine saubere Oberfläche aufweisen, so dass eine Erfassung/Messung durch das photosensitive Element nicht durch Ablagerungen gestört wird. Durch die vorliegende Erfindung besteht somit die Möglichkeit ein Beleuchtungssystem mit ansteuerbaren Leuchten individuell für die Bedürfnisse einer Person anzupassen, da auf Basis des individuell an einer Person erfassten Parameters eine oder mehrere Leuchten bzw. Verschattungseinrichtungen des Beleuchtungssystems angesteuert werden können.

Beispiele für die technische Umsetzung der Anordnung von Elektronikbauteilen in Kontaktlinsen (etwa Sensoren, Energiegewinnungsschaltkreise, Sendeeinheiten, photosensitive Elemente, etc.) werden insbesondere in den Druckschriften WO 2006/015315 A2, WO 2014/058733 A1 oder der US 2014/0098226 A1 offenbart.

Vorzugsweise ist durch das photosensitive Elemente die Beleuchtungsstärke des auf das Erfassungs- und Kommunikationsmittel auftreffenden Lichts erfassbar und diese wird als Parameter an die Empfangs- und Steuereinheit übertragen, um die ansteuerbaren Leuchten und/oder Verschattungseinrichtungen in Abhängigkeit dieses Parameters zu steuern. Die Beleuchtungsstärke stellt dabei einen der wichtigsten Parameter einer Beleuchtung dar. Unter der Beleuchtungsstärke wird dabei üblicherweise der Lichtstrom verstanden, der auf eine Flächeneinheit fällt.

Als photosensitives Element wird dabei vorzugsweise eine Leuchtdiode, eine Fotodiode, eine organische Leuchtdiode oder ein Halbleiterdünnschichtsystem eingesetzt. Ebenfalls denkbar ist die Verwendung sogenannter 2-D Materialien wie z.B. Graphen oder MoS2. Diese verbinden in besonders geeigneter Weise Halbleitereigenschaften, Transmission / Absorption sowie günstige chemische Eigenschaften. Dadurch besteht die Möglichkeit mit dem photosensitiven Element den Fotostrom zu erfassen, dessen Höhe insbesondere von der am Erfassungs- und Kommunikationsmittel (also unmittelbar am Auge einer Person) vorliegenden Beleuchtungsstärke abhängig ist.

Vorteilhafterweise umfasst der Energiegewinnungsschaltkreis zumindest eine Energiespeichervorrichtung zum Speichern elektrischer Energie, vorzugsweise ein Kondensatorelement.

Die für den Betrieb der Erfassungs- und Kommunikationsmittel notwendige elektrische Energie kann beispielsweise durch bereitgestellt werden, dass der Energiegewinnungsschaltkreis eingerichtet ist, elektrische Energie mittels elektromagnetischer Kopplung zu erzeugen. Beispielsweise durch eine Antenne, die sich in der Nähe der Kontaktlinse befindet oder über eine Schleifenantenne, die direkt in die Kontaktlinse integriert ist. Alternativ oder zusätzlich kann der Energiegewinnungsschaltkreis mit dem photosensitiven Element verbunden sein und derart eingerichtet sein, um einen Fotostrom, der am photosensitiven Element durch das einfallende Licht entsteht, aufzunehmen.

Vorzugsweise ist die Empfangs- und Steuereinheit in der ansteuerbaren Leuchte oder in der ansteuerbaren Verschattungseinrichtung angeordnet. Alternativ besteht allerdings auch die Möglichkeit die Empfangs- und Steuereinheit getrennt voneinander anzuordnen. Je nach Ausgestaltung und Sendereichweite des Erfassungs- und Kommunikationsmittels besteht auch die Möglichkeit, mehrere Empfangseinheiten in einem Raum anzuordnen.

Vorzugsweise ist das Erfassungs- und Kommunikationsmittel eingerichtet, um moduliertes Licht, das von einer ansteuerbaren Leuchte abgegeben wird, zu erfassen, wobei mittels des modulierten Lichts zumindest ein dieser Leuchte zuordenbarer Parameter an das Erfassungs- und Kommunikationsmittel übermittelbar ist, und wobei durch die Schnittstelle zur drahtlosen Kommunikation zumindest der dieser Leuchte zuordenbarer Parameter auf die Empfangs- und Steuereinheit übertragbar ist. Mit anderen Worten ist es bevorzugt, dass die ansteuerbare Leuchte bzw. die ansteuerbaren Leuchten jeweils einen Adressparameter der Leuchte an die Erfassungs- und Kommunikationsmittel übertragen und die Erfassungs- und Kommunikationsmittel diesen wiederum an die Empfangs- und Steuereinheit übertragen. Dadurch besteht die Möglichkeit die Position der Erfassungs- und Kommunikationsmittel bzw. der Person zu bestimmen. Diese Positionsdaten können anschließend zur Steuerung des Lichtsystems als auch zur Ausgabe von Navigationsinformationen an die Person über eine Ausgabeeinheit verwendet werden. Die Ausgabeeinheit kann dabei eine separate Monitor-/Bildeinheit sein oder durch einen in einer Kontaktlinse integrierten Bild-/Darstellungsschaltkreis bereitgestellt werden.

Ferner betrifft die vorliegende Erfindung ein Verfahren zur Steuerung von ansteuerbaren Leuchten und/oder Verschattungseinrichtungen, umfassend die folgenden Schritte:
- Bereitstellen eines oben genannten Steuersystems;
- Erfassen zumindest eines Parameters, insbesondere der Beleuchtungsstärke, des auf das Erfassungs- und Kommunikationsmittel auftreffenden Lichts;
- Übermitteln des erfassten Parameters an eine Empfangs- und Steuereinheit; und
- Steuern der ansteuerbaren Leuchten und/oder Verschattungseinrichtungen durch die Empfangs- und Steuereinheit in Abhängigkeit des erfassten und übermittelten Parameters.

Vorzugsweise erfasst das Erfassungs- und Kommunikationsmittel ein von einer ansteuerbaren Leuchte abgegebenes moduliertes Licht, wobei dadurch ein dieser Leuchte zuordenbarer Parameter übermittelt wird, und wobei durch die Schnittstelle zur drahtlosen Kommunikation zumindest der dieser Leuchte zuordenbare Parameter auf die Empfangs- und Steuereinheit übertragen wird. Basierend auf dem übertragenen Parameter erfolgt vorzugsweise eine Positionsbestimmung der Erfassungs- und Kommunikationsmittel, um die ansteuerbaren Leuchten und/oder Verschattungseinrichtungen in Abhängigkeit der Position der Erfassungs- und Kommunikationsmittel anzusteuern, um Navigationsinformationen an die Person über eine Ausgabeeinheit auszugeben und/oder um Ortsinformationen der Erfassungs- und Kommunikationsmittel zu erfassen.

### 4. Beschreibung einer bevorzugten Ausführungsform

Nachfolgend wird eine detaillierte Beschreibung der Figuren gegeben. Darin zeigt:
- **Figur 1**: eine schematische Ansicht eines in einer Kontaktlinse integrierten individualisierten Erfassungs- und Kommunikationsmittels;
- **Figur 2**: eine schematische Ansicht einer Person mit einem individualisierten Erfassungs- und Kommunikationsmittel im Bereich eines Lichtsystems mit ansteuerbaren Leuchten; und
- **Figur 3**: ein schematisches Blockschaltbild einer bevorzugten Ausführungsform eines erfindungsgemäßen Steuersystems.

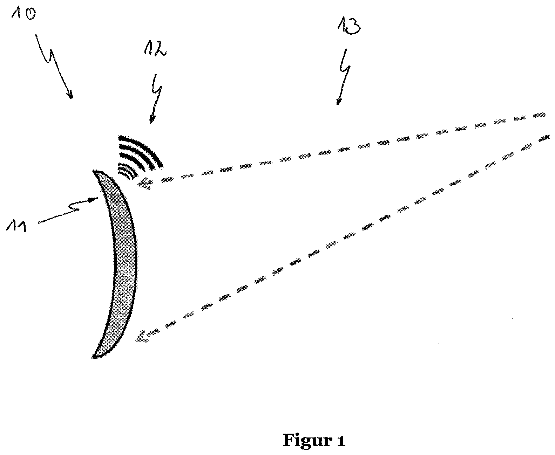

Figur 1 zeigt eine schematische Ansicht eines in einer Kontaktlinse 10 integrierten individualisierten Erfassungs- und Kommunikationsmittels 11. Unter einem auf eine Person individualisierten Erfassungs- und Kommunikationsmittel 11 ist dabei zu verstehen, dass dieses, wie durch die gezeigte Kontaktlinse 10, einer Person zugeordnet bzw. zuordenbar ist.

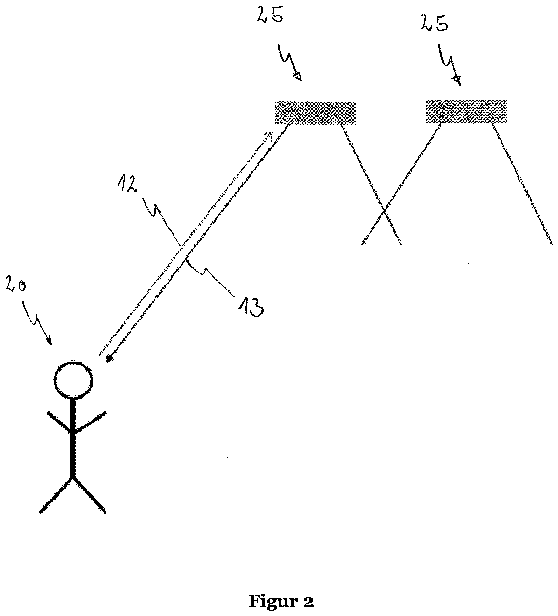

Die Erfassungs- und Kommunikationsmittels 11 umfassen zumindest eine Schnittstelle zur drahtlosen Kommunikation (angedeutet mit Bezugszeichen 12) und zumindest ein photosensitives Element, das eingerichtet ist, um zumindest einen Parameter, vorzugsweise die Beleuchtungsstärke, des auf das Erfassungs- und Kommunikationsmittel 11 auftreffenden Lichts (angedeutet mit Bezugszeichen 13) zu erfassen. Ferner umfasst das Erfassungs- und Kommunikationsmittels 11 zumindest einen Energiegewinnungsschaltkreis, der eingerichtet ist, um die Schnittstelle zur drahtlosen Kommunikation und gegebenenfalls das photosensitive Element zu betreiben. Mit der gezeigten Kontaktlinse 10 kann somit ein Beleuchtungsparameter, insbesondere die Beleuchtungsstärke, an dem von der Person wahrgenommenen Beleuchtungseindruck unmittelbar gekoppelt werden. Dieser erfasste Parameter kann anschließend mittels der Schnittstelle zur drahtlosen Kommunikation an eine Empfangs- und Steuereinheit (vgl. Figur 2) übermittelt werden, so dass durch diese eine Ansteuerung der ansteuerbaren Leuchten und/oder Verschattungseinrichtungen in Abhängigkeit des übermittelten Parameters erfolgen kann.

Somit besteht durch ein erfindungsgemäßes Steuersystem die Möglichkeit ein Beleuchtungssystem mit ansteuerbaren Leuchten und Verschattungseinrichtungen individuell für die Bedürfnisse einer Person anzupassen, da auf Basis des unmittelbar an einer Person (genauer unmittelbar am Auge der Person) erfassten Parameters eine oder mehrere Leuchten bzw. weitere ansteuerbare Verschattungseinrichtungen des Beleuchtungssystems angesteuert werden können.

Das photosensitive Element umfasst dabei vorzugsweise einen Leuchtdiodenschaltkreis, mit dem in Abhängigkeit der Beleuchtungsstärke ein Fotostrom bereitgestellt werden kann. In einer besonders bevorzugten Ausführungsform wird der Fotostrom dabei zum Betrieb des Erfassungs- und Kommunikationsmittels 11 benutzt, wobei alternativ oder zusätzlich elektrische Energie mittels elektromagnetischer Kopplung erzeugt werden kann, beispielsweise durch eine Antenne, die sich in der Nähe der Kontaktlinse 10 befindet oder über eine Schleifenantenne, die direkt in die Kontaktlinse 10 integriert sein kann.

Figur 2 zeigt eine schematische Ansicht einer Person 20, die eine in Figur 1 gezeigte Kontaktlinse 10 trägt. Die Person 20 befindet sich im Bereich eines Lichtsystems mit verschiedenen ansteuerbaren Leuchten 25. Durch Erfassungs- und Kommunikationsmittel 12 wird dabei zumindest ein Parameter (vorzugsweise die Beleuchtungsstärke) des von der oder den Leuchten 25 abgegebenen Lichts (angedeutet mit Bezugszeichen 13) erfasst und an die in den Leuchten 25 integrierten Empfangs- und Steuereinheit übermittelt (angedeutet mit Bezugszeichen 12). Die Empfangs- und Steuereinheit steuert anschließend die Lichtabgabe in Abhängigkeit des übertragenen Parameters, wobei die Leuchten 25 entweder gemeinsam oder individuell angesteuert werden können.

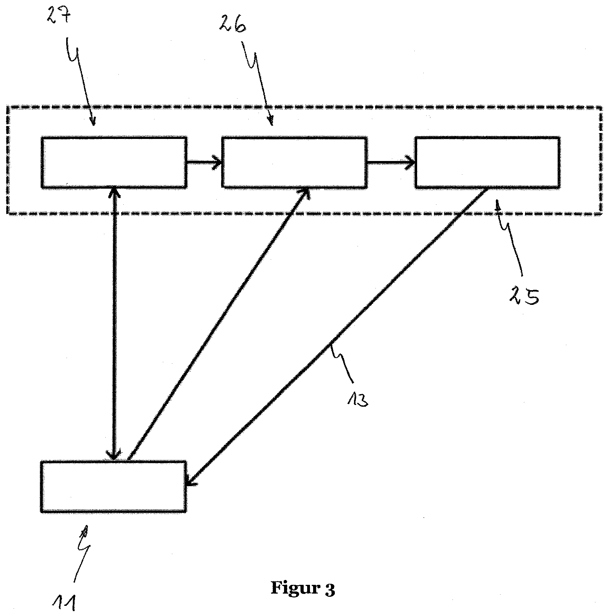

Figur 3 zeigt ein schematisches Blockschaltbild der bevorzugten Ausführungsform eines erfindungsgemäßen Steuersystems. Das Erfassungs- und Kommunikationsmittel 11 ist vorzugsweise derart eingerichtet, um moduliertes Licht 13, das von der ansteuerbaren Leuchte 25 abgegeben wird, zu erfassen, wobei mittels des modulierten Lichts 13 zumindest ein dieser Leuchte zuordenbarer Parameter an das Erfassungs- und Kommunikationsmittel 11 übermittelt wird, und wobei durch die Schnittstelle zur drahtlosen Kommunikation zumindest der dieser Leuchte 25 zuordenbarer Parameter auf die Empfangs- und Steuereinheit 26 übertragbar ist. Mit anderen Worten ist es bevorzugt, dass die ansteuerbare Leuchte 25 bzw. die ansteuerbaren Leuchten 25 jeweils einen Adressparameter der Leuchte 25 an die Erfassungs- und Kommunikationsmittel 11 übertragen und die Erfassungs- und Kommunikationsmittel 11 diesen wiederum an die Empfangs- und Steuereinheit 26 übertragen. Dadurch besteht die Möglichkeit die Position der Erfassungs- und Kommunikationsmittel 11 bzw. der Person 20 zu bestimmen. Diese Positionsdaten können anschließend zur Steuerung des Lichtsystems als auch zur Ausgabe von Navigationsinformationen an die Person über eine Ausgabeeinheit verwendet werden. Die Ausgabeeinheit kann dabei eine separate Monitor-/Bildeinheit sein oder durch einen in der Kontaktlinse 10 integrierten Bild-/Darstellungsschaltkreis bereitgestellt werden. In der in Figur 3 gezeigten Ansicht wird der Adressparameter der Leuchte 25 dabei an eine Navigationseinheit 27 und der Beleuchtungsparameter an die Empfangs- und Steuereinheit 26 übertragen, wobei diese Darstellung lediglich beispielhaft ist.

Die Empfangs- und Steuereinheit 26 und ggf. die Navigationseinheit 27 können dabei in der ansteuerbaren Leuchte 25 (oder in einer anderen ansteuerbaren Einrichtung) angeordnet sein. Alternativ besteht allerdings auch die Möglichkeit die Empfangs- und Steuereinheit 26 und die Navigationseinheit 27 jeweils getrennt voneinander anzuordnen. Je nach Ausgestaltung und Sendereichweite des Erfassungs- und Kommunikationsmittels 11 besteht auch die Möglichkeit, mehrere separate Empfangseinheiten in einem Raum anzuordnen.

Die vorliegenden Erfindung ist nicht auf das vorhergehend gezeigte Ausführungsbeispiel eines erfindungsgemäßen Steuersystems beschränkt, solange sie vom Gegenstand der folgenden Ansprüche umfasst ist.

## Patentansprüche

1. Steuersystem zur Steuerung von ansteuerbaren Leuchten (25) und/oder Verschattungseinrichtungen, umfassend:
- zumindest ein auf eine Person individualisiertes Erfassungs- und Kommunikationsmittel (11), wobei das Erfassungs- und Kommunikationsmittel (11) eine Schnittstelle zur drahtlosen Kommunikation und zumindest ein photosensitives Element umfasst, das eingerichtet ist, um zumindest einen Parameter des auf das Erfassungs- und Kommunikationsmittel (11) auftreffenden Lichts (13) zu erfassen, und wobei das Erfassungs- und Kommunikationsmittel (11) zumindest einen Energiegewinnungsschaltkreis umfasst, der eingerichtet ist, um zumindest die Schnittstelle zur drahtlosen Kommunikation zu betreiben; und
- zumindest eine Empfangs- und Steuereinheit (26), die eingerichtet ist in Abhängigkeit des vom Erfassungs- und Kommunikationsmittel (11) erfassten und auf die Empfangs- und Steuereinheit (26) drahtlos übertragenen Parameters die ansteuerbaren Leuchten (25) und/oder Verschattungseinrichtungen zu steuern,
**dadurch gekennzeichnet, dass** das Erfassungs- und Kommunikationsmittel (11) in einer Kontaktlinse (10) integriert ist.

2. Steuersystem nach Anspruch 1, wobei durch das photosensitive Elemente die Beleuchtungsstärke des auf das Erfassungs- und Kommunikationsmittel (11) auftreffenden Lichts (13) erfassbar ist und diese als Parameter an die Empfangs- und Steuereinheit (26) übertragen wird, um die ansteuerbaren Leuchten (25) und/oder Verschattungseinrichtungen in Abhängigkeit dieses Parameters zu steuern.

3. Steuersystem nach einem der vorhergehenden Ansprüche, wobei das photosensitive Element eine Leuchtdiode, eine Fotodiode, eine organische Leuchtdiode oder ein Halbleiterdünnschichtsystem ist, oder wobei für das photosensitive Element 2-D Materialien, wie z.B. Graphen oder MoS2, verwendet werden.

4. Steuersystem nach einem der vorhergehenden Ansprüche, wobei der Energiegewinnungsschaltkreis weiterhin zumindest eine Energiespeichervorrichtung zum Speichern elektrischer Energie umfasst.

5. Steuersystem nach einem der vorhergehenden Ansprüche, wobei die Energiespeichervorrichtung ein Kondensatorelement umfasst.

6. Steuersystem nach einem der vorhergehenden Ansprüche, wobei der Energiegewinnungsschaltkreis eingerichtet ist, elektrische Energie mittels elektromagnetischer Kopplung zu erzeugen.

7. Steuersystem nach einem der vorhergehenden Ansprüche, wobei der Energiegewinnungsschaltkreis mit dem photosensitiven Element verbunden ist und derart eingerichtet ist, um einen Fotostrom, der am photosensitiven Element durch das einfallende Licht entsteht, aufzunehmen.

8. Steuersystem nach einem der vorhergehenden Ansprüche, wobei die Empfangs- und Steuereinheit (26) in der ansteuerbaren Leuchte (25) oder in der Verschattungseinrichtung angeordnet ist.

9. Steuersystem nach einem der vorhergehenden Ansprüche, wobei die zumindest eine Empfangs- und Steuereinheit (26) eine Empfangseinheit und eine Steuereinheit ist, wobei die Empfangseinheit und die Steuereinheit getrennt voneinander angeordnet sind.

10. Steuersystem nach einem der vorhergehenden Ansprüche, wobei das Erfassungs- und Kommunikationsmittel (11) eingerichtet ist moduliertes Licht (13), das von einer ansteuerbaren Leuchte (25) abgegeben wird, zu erfassen, wobei mittels des modulierten Lichts (13) zumindest ein dieser Leuchte (25) zuordenbarer Parameter übermittelbar ist, und wobei durch die Schnittstelle zur drahtlosen Kommunikation zumindest der dieser Leuchte (25) zuordenbarer Parameter auf die Empfangs- und Steuereinheit (26) übertragbar ist.

11. Verfahren zur Steuerung von ansteuerbaren Leuchten (25) und/oder Verschattungseinrichtungen umfassend die folgenden Schritte:
- Bereitstellen eines Steuersystems nach einem der Ansprüche 1 bis 10;
- Erfassen zumindest eines Parameters, insbesondere der Beleuchtungsstärke, des auf das Erfassungs- und Kommunikationsmittel (11) auftreffenden Lichts (13);
- Übermitteln des erfassten Parameters an eine Empfangs- und Steuereinheit (26); und
- Steuern der ansteuerbaren Leuchten (25) und/oder Verschattungseinrichtungen durch die Empfangs- und Steuereinheit (26) in Abhängigkeit des erfassten und übermittelten Parameters.

12. Verfahren nach Anspruch 11, wobei das Erfassungs- und Kommunikationsmittel (11) ein von einer ansteuerbaren Leuchte (25) abgegebene moduliertes Licht (13) erfasst und dadurch ein dieser Leuchte (25) zuordenbarer Parameter übermittelt wird, und wobei durch die Schnittstelle zur drahtlosen Kommunikation zumindest der dieser Leuchte (25) zuordenbare Parameter auf die Empfangs- und Steuereinheit (26) übertragen wird.

13. Verfahren nach Anspruch 12, wobei basierend auf dem übertragenen Parameter einer Leuchte (25) eine Positionsbestimmung (26) der Erfassungs- und Kommunikationsmittel (11) erfolgt, um die ansteuerbaren Leuchten (25) und/oder Verschattungseinrichtungen in Abhängigkeit der Position der Erfassungs- und Kommunikationsmittel (11) anzusteuern und/oder um Ortsinformationen der Erfassungs- und Kommunikationsmittel (11) zu erfassen.

## Claims

1. Control system for controlling controllable luminaires (25) and/or shading devices, comprises:
- at least one personalized detection and communication means (11) carried by a person, wherein the detection and communication means (11) comprises a wireless communication interface and at least one photosensitive element arranged to detect at least one parameter of the light (13) falling upon the detection and communication means (11), and wherein the detection and communication means (11) comprises at least one power supply circuit to power at least the wireless communication interface; and
- at least one receiving and control unit (26) which is designed to control the controllable luminaires (25) and/or shading devices as a function of the parameter detected by the receiving and control unit (26) and transmitted wirelessly to the detection and communication means (11),
**characterized in that**
the detection and communication means (11) is integrated in a contact lens (10).

2. Control system according to claim 1, wherein the illuminance of the light (13) falling upon the detection and communication means (11) is detected by the photosensitive element, and is transmitted as a parameter to the receiving and control unit (26) in order to control the controllable luminaires (25) and/or shading devices in response to this parameter.

3. Control system according to any one of the preceding claims, wherein the photosensitive element is a light emitting diode, a photodiode, an organic light emitting diode or a semiconductor thin film system, or wherein 2-D materials such as, for example, graphene or MoS2, is used for the photosensitive element.

4. Control system according to one of the preceding claims, wherein the power supply circuit further comprises at least one energy storage device to store electrical energy.

5. Control system according to one of the preceding claims, wherein the energy storage device comprises a capacitor element.

6. Control system according to any one of the preceding claims, wherein the power supply circuit is designed to generate electrical energy by means of electromagnetic coupling.

7. Control system according to anyone of the preceding claims, wherein the power supply circuit is connected to the photosensitive element and is designed to receive a photocurrent produced by the light falling upon the photosensitive element.

8. Control system according to one of the preceding claims, wherein the receiving and control unit (26) is arranged in the controllable luminaire (25) or in the shading device.

9. Control system according to one of the preceding claims, wherein the at least one receiving and control unit (26) comprises a receiving unit and a control unit, wherein the receiving unit and the control unit are arranged to be separate from each other.

10. Control system according to one of the preceding claims, wherein the detection and communication means (11) is designed to detect modulated light (13), which is emitted by a controllable luminaire (25), wherein by means of the modulated light (13), at least one parameter assignable to this luminaire (25) may be transmitted, and wherein the parameter assignable to this luminaire (25) may be transferred to the receiving and control unit (26) through the interface for wireless communication.

11. Method for controlling controllable luminaires (25) and/or shading devices comprising the following steps:
- providing a control system according to one of the claims 1 to 10;
- detecting at least one parameter, in particular the illuminance, of the light (13) falling upon the detection and communication means (11);
- transmitting the detected parameter to a receiving and control unit (26); and
- controlling the controllable luminaires (25) and/or shading devices by the receiving and control unit (26) as a function of the detected and transmitted parameter.

12. Method according to claim 11, wherein the detection and communication means (11) detects a modulated light (13) emitted by a controllable luminaire (25), wherein a parameter assignable to this luminaire (25) is thereby transmitted, and wherein at least the parameter assignable to this luminaire (25) is transferred to the receiving and control unit (26) via wireless communication interface.

13. Method according to claim 12, wherein position determination (26) of the detection and communication means (11) is effected based on the transmitted parameter of a luminaire (25) in order to control the controllable luminaires (25) and/or shading devices as a function of the position of the detection and communication means (11) and/or to acquire location information of the detection and communication means (11).

## Revendications

1. Système de commande destiné à la commande de luminaires (25) pilotables et/ou dispositifs d'ombrage, comprenant :
- au moins un moyen de détection et de communication (11) individualisé pour une personne, le moyen de détection et de communication (11) comprenant une interface pour la communication sans fil et au moins un élément photosensible qui est aménagé pour détecter au moins un paramètre de la lumière (13) arrivant sur le moyen de détection et de communication (11), et le moyen de détection et de communication (11) comprenant au moins un circuit de production d'énergie qui est aménagé pour faire fonctionner au moins l'interface pour la communication sans fil ; et
- au moins une unité de réception et de commande (26) qui est aménagée pour commander les luminaires (25) pilotables et/ou dispositifs d'ombrage en fonction du paramètre détecté par le moyen de détection et de communication (11) et transmis sans fil à l'unité de réception et de commande (26),
**caractérisé en ce que** le moyen de détection et de communication (11) est intégré dans une lentille de contact (10).

2. Système de commande selon la revendication 1, l'intensité d'éclairage de la lumière (13) arrivant sur le moyen de détection et de communication (11) pouvant être détectée par l'élément photosensible et cette intensité étant transmise en tant que paramètre à l'unité de réception et de commande (26) pour commander les luminaires (25) pilotables et/ou dispositifs d'ombrage en fonction de ce paramètre.

3. Système de commande selon l'une des revendications précédentes, l'élément photosensible étant une diode lumineuse, une photodiode, une diode lumineuse organique ou un système à couche mince semi-conductrice, ou des matériaux 2D tels que par exemple graphène ou MoS2, étant utilisés pour l'élément photosensible.

4. Système de commande selon l'une des revendications précédentes, le circuit de production d'énergie comprenant également au moins un dispositif de stockage d'énergie destiné à stocker l'énergie électrique.

5. Système de commande selon l'une des revendications précédentes, le dispositif de stockage d'énergie comprenant un élément de condensateur.

6. Système de commande selon l'une des revendications précédentes, le circuit de production d'énergie étant aménagé pour produire de l'énergie électrique au moyen d'un couplage électromagnétique.

7. Système de commande selon l'une des revendications précédentes, le circuit de production d'énergie étant raccordé à l'élément photosensible et étant aménagé pour recevoir un courant photoélectrique qui apparaît sur l'élément photosensible du fait de la lumière incidente.

8. Système de commande selon l'une des revendications précédentes, l'unité de réception et de commande (26) étant disposée dans le luminaire (25) pilotable ou dans le dispositif d'ombrage.

9. Système de commande selon l'une des revendications précédentes, l'unité de réception et de commande (26) au moins au nombre de un étant une unité de réception et une unité de commande, l'unité de réception et l'unité de commande étant disposées séparément l'une de l'autre.

10. Système de commande selon l'une des revendications précédentes, le moyen de détection et de communication (11) étant aménagé pour détecter la lumière (13) modulée qui est émise par un luminaire (25) pilotable, au moins un paramètre qui peut être affecté à ce luminaire (25) pouvant être transmis au moyen de la lumière (13) modulée, et au moins le paramètre qui peut être affecté à ce luminaire (25) pouvant être transmis à l'unité de réception et de commande (26) par l'interface pour la communication sans fil.

11. Procédé de commande de luminaires (25) pilotables et/ou de dispositifs d'ombrage comprenant les étapes suivantes :
- fourniture d'un système de commande selon l'une des revendications 1 à 10 ;
- détection d'au moins un paramètre, en particulier de l'intensité d'éclairage, de la lumière (13) arrivant sur le moyen de détection et de communication (11) ;
- transmission du paramètre détecté à une unité de réception et de commande (26) ; et
- commande des luminaires (25) pilotables et/ou dispositifs d'ombrage par l'unité de réception et de commande (26) en fonction du paramètre détecté et transmis.

12. Procédé selon la revendication 11, le moyen de détection et de communication (11) détectant une lumière (13) modulée délivrée par un luminaire (25) pilotable, et de ce fait un paramètre qui peut être affecté à ce luminaire (25) étant transmis, et au moins le paramètre pouvant être affecté à ce luminaire (25) étant transmis à l'unité de réception et de commande (26) par l'interface pour la communication sans fil.

13. Procédé selon la revendication 12, une détermination de position (26) des moyens de détection et de communication (11) étant effectuée sur la base du paramètre transmis d'un luminaire (25) pour piloter les luminaires (25) pilotables et/ou dispositifs d'ombrage en fonction de la position des moyens de détection et de communication (11) et/ou pour détecter des informations de lieu des moyens de détection et de communication (11).
